# EUROPEAN PATENT APPLICATION

(11) **EP 0 671 583 A1**
(43) Date of publication of application: **13.09.1995**
(21) Application number: 95200530.4
(22) Date of filing: 03.03.1995
(51) Int. Cl.: F16L 41/03

(54) **Manifold for hydraulic systems**

(30) Priority: 08.03.1994 IT MI940166 U
(71) Applicant: Romanelli, Antonio, I-80129 Napoli (IT)
(72) Inventor: Romanelli, Antonio, I-80129 Napoli (IT)
(74) Representative: Faraggiana, Vittorio, Dr. Ing.

(57) **Abstract**

A manifold for the provision of branches from hydraulic fluid system ducts comprises two cylindrical main ducts (11,12) and secondary cylindrical branch ducts (19,20) defining its own internal cross section and flanges (21-24) for connection with hydraulic tubes. The secondary ducts are respectively connected hydraulically to only one of the main ducts (11,12). The axis of each secondary duct (19,20) has a broken line course with distance from the main duct axis to which it is connected less than the sum of the respective radii to provide interference between the respective internal cross sections and with distance from the main duct axis to which it is not connected greater than the sum of the respective radii.

## Description

The present invention relates to a manifold for the provision of branches from hydraulic system main ducts.

In the technology of hydraulic, heating and plumbing systems a main duct is normally branched from the riser and subsequently branches into a plurality of pipes often embedded in walls for carrying water to the using equipment.

For rational organisation of the systems the branches of said pipes are often grouped in a readily accessible central position for installation and maintenance. Said branches are advantageously provided by means of modular assembly of manifold units for branching of water from the main ducts and a plurality of secondary ducts.

Said manifolds consist of two main cylindrical ducts and paths for hot and cold water respectively from each of which branch two secondary cylindrical ducts mutually coaxial and essentially perpendicular to the main one and each having a respective flange for connection with a direct pipe to one user.

Said manifolds are the enbloc type and the ducts are provided by means of milling inside their body.

To achieve in a simple manner the connection between each main duct and the respective secondary ducts they are milled in such a manner that the centre-to-centre distance between the secondary ducts and the main ducts is less than the sum of their respective radii so as to create interference between the respective internal cross sections. This interference by each secondary duct clearly creates throttling in the cross section of the main duct to which it is not connected.

This configuration is advantageous for simplification of machining and limiting the depth of the manifold but it has the shortcoming of creating considerable pressure losses in the main ducts because of the above said throttling.

The general purpose of the present invention is to overcome the above shortcomings by supplying a branching manifold unit easy and economical to manufacture and which would minimise pressure drop in the fluid flowing through it thanks to a particular configuration of the secondary ducts.

In view of said purpose it was sought to provide in accordance with the present invention a manifold for provision of branches from hydraulic fluid system ducts and comprising two main cylindrical ducts and at least one secondary cylindrical branch duct defining its internal cross section and two flanges for connection with hydraulic tubes with at least one secondary duct being hydraulically connected to only one of the main ducts respectively and characterised in that the axis of the secondary duct has a broken-line course with distance from the main duct axis to which it is connected less than the sum of the respective radii to provide interference between the respective internal cross sections and with distance from the main duct axis to which it is not connected greater than the sum of the respective radii.

To clarify the explanation of the innovative principles of the present invention and its advantages compared with the known art there is described below with the aid of the annexed drawings a possible embodiment thereof by way of non-limiting example applying said principles. In the drawings:
Fig. 1 shows a front view of a manifold in accordance with the present invention,
Fig. 2 shows a view along plane of cut II-II of Fig. 1,
Fig. 3 shows a view along plane of cut III-III of Fig. 1, and
Fig. 4 shows a partially cross sectioned side view of the manifold of Fig. 1.

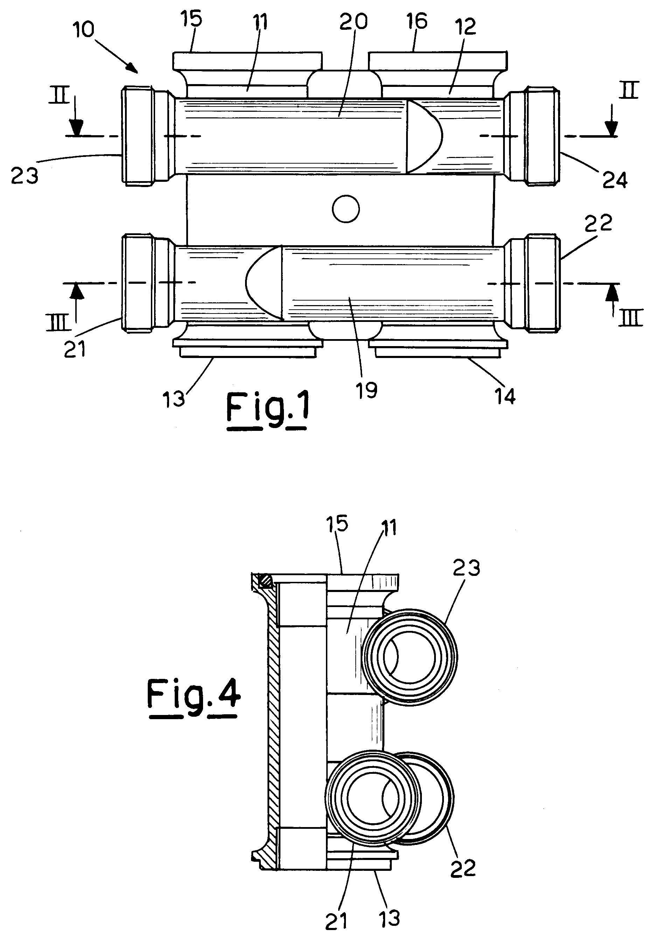

With reference to the figures Fig. 1 shows a hydraulic manifold indicated as a whole by 10 and consisting of two main cylindrical ducts 11, 12 of radius R useable for the circulation of different flows.

The main ducts 11, 12 have respective inlet flanges 13, 14 and outlet flanges 15, 16 mutually connectable in a known manner to respective outlet and inlet flanges of piping or additional hydraulic manifolds not shown here to provided modular units for branching fluids towards a plurality of users.

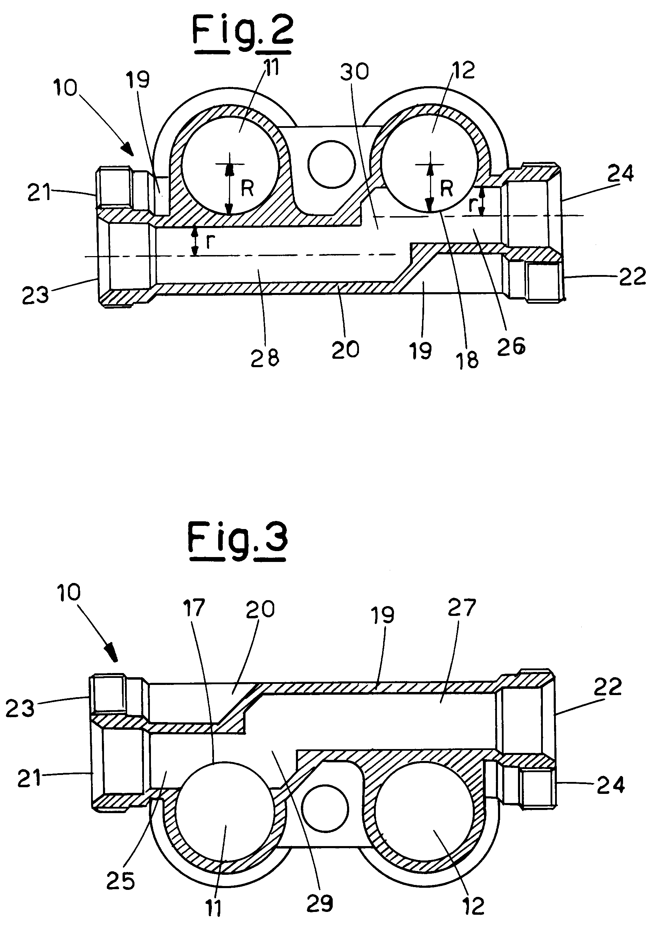

As shown in Fig. 2 and Fig. 3 the main ducts 11, 12 exhibit in addition in longitudinally and mutually offset positions respective connections 17, 18 with secondary cylindrical branch ducts 19, 20 having radius r. Each of the secondary ducts 19, 20 has two flanges 21, 22 and respectively 23, 24 designed for connection in a known manner with connection tubes with the users.

In the connection zones 17, 18 the secondary ducts 19, 20 exhibit respective rectilinear sections 25, 26 whose axes are spaced by the axes of the main ducts 11, 12 by a distance less than the sum of the respective radii r, R as may be seen in FIG. 2 to provide interference between the corresponding internal cross sections in such a manner as to branch the fluids to said secondary ducts.

The secondary ducts 19, 20 also exhibit opposite the main ducts to which they are not connected respective rectilinear sections 27, 28 with axies parallel to those of the sections 25, 26 whose axes are spaced by the axes of the main ducts by a distance greater than the sum of the respective radii r, R in such a manner that their cross section does not interfere with said main ducts. The misalignment of the two rectilinear sections of each secondary duct seen clearly in FIG. 4 is less than or equal to the sum of the radii of the two sections so as to facilitate provision during milling of the secondary ducts of the interconnections 29, 30 between said rectilinear sections.

Naturally the above description of an embodiment applying the innovative principles of the present invention is given merely by way of example and therefore is not to be taken as a limitation of the patent right claimed here.

For example, the manifold in accordance with the present invention can be provided with a configuration comprising the two main ducts 11, 12 and only one of the secondary branch ducts respectively 19 or 20 to provide the branch only from one or the other of the main ducts. Such an embodiment is useful if the number of users of the two flows is different and thus avoid assembling a more cumbersome complete module of which only one secondary duct will be used.

## Claims

1. Manifold for provision of branches from hydraulic fluid system ducts and comprising two main cylinders (11,12) and at least one secondary cylindrical branch duct (19) defining its own internal cross section area and two flanges (21,22) for connection with hydraulic tubes and at least one secondary duct respectively connected hydraulically to only one (11) of the main ducts and characterised in that the axis of the secondary duct (19) has a broken-line course with distance from the axis of the main duct (11) to which it is connected less than the sum of the respective radii to provide interference between the respective internal cross sections and with distance from the axis of the main duct (12) to which it is not connected greater than the sum of the respective radii.

2. Manifold in accordance with claim 1 characterised in that the at least one secondary branch duct (19) consists of two communicating rectilinear sections (25,27) with parallel axes mutually spaced and in a direction orthogonal to the main ducts (11,12) by a distance less than or equal to the sum of the radii of the individual sections (25,27).

3. Manifold in accordance with claim 1 characterised in that there are two secondary branch ducts (19,20) each of which is respectively connected hydraulically to only one of the main ducts (11,12).
